# EUROPEAN PATENT APPLICATION

(11) **EP 4 553 932 A1**
(43) Date of publication of application: **14.05.2025**
(21) Application number: 23891096.2
(22) Date of filing: 21.07.2023
(51) Int. Cl.: H01M 6/06, H01M 4/06, H01M 6/02, H01M 50/489

(54) **ALKALINE BATTERY AND METHOD FOR MANUFACTURING ALKALINE BATTERY**

(30) Priority: 15.11.2022 JP 2022182350
(71) Applicant: Seiko Instruments Inc., Chiba-shi, Chiba 261-8507 (JP)
(72) Inventor: OTAKE, Takanori, Chiba-shi, Chiba 261-8507 (JP)
(74) Representative: Lewis Silkin LLP
(86) International application number: PCT/JP2023/026831
(87) International publication number: WO 2024/105934

(57) **Abstract**

Provided is an alkaline battery (1) including a positive electrode (5), a negative electrode (7), a separator (6), and an electrolytic solution which are accommodated in a container (8). The electrolytic solution is a potassium hydroxide aqueous solution having a concentration of 40% to 50%. The negative electrode consists of a gel-like negative electrode mixture containing a negative electrode active material and an alkaline aqueous solution. The alkaline aqueous solution contains potassium hydroxide and sodium hydroxide in a molar ratio range of 89:11 to 96:4. The positive electrode consists of a positive electrode mixture including a positive electrode active material containing silver oxide and manganese dioxide, and a blending ratio of manganese dioxide in the positive electrode mixture is 25% to 50% by mass.

## Description

### TECHNICAL FIELD

The present invention relates to an alkaline battery and a method for manufacturing an alkaline battery.

Priority is claimed on Japanese Patent Application No. 2022-182350, filed November 15, 2022, the content of which is incorporated herein by reference.

### BACKGROUND ART

A silver oxide battery, which uses silver oxide as a positive electrode active material, is small in size and has a high capacity.

Taking advantage of this feature, applications of the silver oxide battery to medical equipment in addition to existing clocks and calculators are also progressing. In the application of the silver oxide battery to new uses, various improvements have been made according to various conditions such as cost and electrical characteristics.

For example, Patent Document 1 below discloses a silver oxide battery for medical equipment that is used for a short period of time in a heavy load use environment. In particular, in order to improve heavy load characteristics, a technology for specifying a particle size (a proportion of particles passing through a 330 mesh) of zinc of a negative electrode has been disclosed. Furthermore, it is disclosed that closed circuit voltage characteristics after 1 minute and 10 minutes under predetermined conditions are obtained by specifying a electrical resistance of a separator (5 to 30 mΩ·(2.54 cm)²).

In addition, it is disclosed that by forming the negative electrode into a non-gel form to maintain a high ion migration ratio, the improvement in heavy load characteristics is achieved, and increasing the proportion of zinc-based particles in the negative electrode, a battery capacity is increased.

### Citation List

### Patent Document

Patent Document 1: Japanese Unexamined Patent Application, First Publication No. 2006-252899

### SUMMARY OF INVENTION

### Technical Problem

In a positive electrode active material of an alkaline battery, it is conceivable to use manganese dioxide or the like, which is a material cheaper than silver oxide, in combination with silver oxide. In this case, by reducing the cost, it is possible to consider facilitating the application to new uses. In such an alkaline battery, in order to obtain similar electrical characteristics to those of the above-described silver oxide battery, it is necessary to improve the efficiency of a discharge reaction of an electrode compared to the related art.

In addition, in a case where manganese dioxide (5.02 g/cm³), which has a smaller specific gravity than that of silver oxide (7.143 g/cm³), is added, it is difficult to increase a pellet density. Therefore, in this case, a battery height tends to be high. However, in a case of addressing this issue, there is a problem in that the amount of a positive electrode that can be used cannot be increased and a discharge capacity cannot be sufficiently obtained.

An object of the present invention is to provide an alkaline battery having excellent discharge characteristics and capable of reducing costs.

### Solution to problem

(1) An alkaline battery according to the present invention is an alkaline battery including a positive electrode, a negative electrode, a separator, and an electrolytic solution accommodated in a container. The electrolytic solution is a potassium hydroxide aqueous solution having a concentration of 40% to 50%. The negative electrode consists of a gel-like negative electrode mixture containing a negative electrode active material and an alkaline aqueous solution. The alkaline aqueous solution contains potassium hydroxide and sodium hydroxide in a molar ratio range of 89:11 to 96:4. The positive electrode consists of a positive electrode mixture including a positive electrode active material containing silver oxide and manganese dioxide. A blending ratio of manganese dioxide in the positive electrode mixture is 50% by mass or less.

In this case, manganese dioxide is blended in the positive electrode mixture at a suitable ratio of 50% by mass or less, and the potassium hydroxide aqueous solution having a concentration of 40% to 50% is included as the electrolytic solution while reducing the cost. Furthermore, since the molar ratio between potassium hydroxide and sodium hydroxide as the electrolytic solution contained in the gel-like negative electrode is set to a suitable ratio of 89:11 to 96:4, it is possible to provide an alkaline battery having excellent discharge characteristics even under a heavy load condition.

(2) In the alkaline battery according to (1), the electrolytic solution may be a potassium hydroxide aqueous solution having a concentration of 44% to 50%.

In a case where the potassium hydroxide aqueous solution having a concentration of 44% to 50% is included as the electrolytic solution, it is possible to reliably provide an alkaline battery having excellent discharge characteristics even under a heavy load condition.

(3) In the alkaline battery according to (1) or (2), the blending ratio of manganese dioxide in the positive electrode mixture may be 25% to 44% by mass.

By setting the blending ratio of manganese dioxide to 25% to 44% by mass, it is possible to reduce the amount of expensive silver oxide used and reliably reduce the cost. Furthermore, it is possible to provide an alkaline battery having excellent discharge characteristics even under a heavy load condition.

(4) In the alkaline battery according to any one of (1) to (3), an electrical resistance of the separator may be 250 mΩ·cm² or less.

By setting the electrical resistance of the separator to 250 mΩ·cm² or less, it is possible to reliably obtain an alkaline battery having excellent discharge characteristics even under a heavy load condition.

(5) In the alkaline battery according to any one of (1) to (4), the container may include a positive electrode can, a negative electrode can, and a gasket that seals the positive electrode can and the negative electrode can.

In this case, it is possible to provide a button-shaped alkaline battery in which the positive electrode, the negative electrode, the separator, and the electrolytic solution described above are provided inside the container consisting of the positive electrode can and the negative electrode can. This alkaline battery is low-cost and has excellent discharge characteristics even under heavy load conditions.

(6) A method for manufacturing an alkaline battery according to the present invention is a method for manufacturing an alkaline battery, the alkaline battery including a positive electrode, a negative electrode, a separator, and an electrolytic solution accommodated in a container, the method including: preparing the negative electrode consisting of a gel-like negative electrode mixture containing a mixed aqueous solution in which a potassium hydroxide aqueous solution having a concentration of 45% and a sodium hydroxide aqueous solution having a concentration of 27% are mixed at a mass ratio of 88:12 to 95:5, and a negative electrode active material, preparing the positive electrode consisting of a positive electrode mixture including a positive electrode active material including containing silver oxide and manganese dioxide, in which a blending ratio of manganese dioxide in the positive electrode mixture is set to 50% by mass or less, and preparing the electrolytic solution consisting of a potassium hydroxide aqueous solution having a concentration of 40% to 50%; and accommodating the positive electrode, the negative electrode, the separator, and the electrolytic solution in the container.

In this case, manganese dioxide is blended in the positive electrode mixture at a suitable ratio of 50% by mass or less, and the potassium hydroxide aqueous solution having a concentration of 40% to 50% is used as the electrolytic solution while reducing the cost. Furthermore, as the electrolytic solution contained in the negative electrode, a potassium hydroxide aqueous solution and a sodium hydroxide aqueous solution are mixed at a mass ratio of 88:12 to 95:5 to be used.

As a result, the molar ratio between potassium hydroxide and sodium hydroxide in the negative electrode mixture can be set to a suitable ratio of 89:11 to 96:4, and it is possible to manufacture an alkaline battery having excellent discharge characteristics even under a heavy load condition.

In addition, by setting the amount of potassium hydroxide to be added to the negative electrode mixture to 95% by mass or less, handleability of the negative electrode mixture can be brought into a good state.

(7) In the alkaline battery according to (6), a potassium hydroxide aqueous solution having a concentration of 44% to 50% may be used as the electrolytic solution.

Since the potassium hydroxide aqueous solution having a concentration of 44% to 50% is used as the electrolytic solution, it is possible to reliably manufacture an alkaline battery having excellent discharge characteristics even under a heavy load condition.

(8) In the alkaline battery according to (6) or (7), a positive electrode in which the blending ratio of manganese dioxide is set to 25% to 44% by mass may be used as the positive electrode.

By setting the blending ratio of manganese dioxide to 25% to 44% by mass, it is possible to reduce the amount of expensive silver oxide used and reliably reduce the cost. Furthermore, it is possible to manufacture an alkaline battery having excellent discharge characteristics even under a heavy load condition.

(9) In the alkaline battery according to any one of (6) to (8), a separator having an electrical resistance of 250 mΩ·cm² or less may be used as the separator.

By using the separator having an electrical resistance of 250 mΩ·cm² or less, it is possible to reliably manufacture an alkaline battery having excellent discharge characteristics even under a heavy load condition.

### Advantageous Effects of Invention

According to the present invention, manganese dioxide is blended with silver oxide at a suitable ratio, and the electrolytic solution can be a potassium hydroxide aqueous solution having a suitable concentration while reducing the cost. Furthermore, by adjusting the molar ratio between potassium hydroxide and sodium hydroxide contained in the negative electrode to a suitable ratio, it is possible to provide an alkaline battery having excellent discharge characteristics.

By adjusting the blending ratio of manganese dioxide to a more suitable range and adjusting the molar ratio between potassium hydroxide and sodium hydroxide to a more suitable ratio, it is possible to provide an alkaline battery having more favorable discharge characteristics. In addition, by adjusting the electrical resistance of the separator to a low range, it is possible to provide an alkaline battery with further improved discharge characteristics.

According to the manufacturing method according to the present invention, the negative electrode is produced together with the negative electrode active material by mixing the potassium hydroxide aqueous solution and the sodium hydroxide aqueous solution having specific concentrations at a specific mass ratio, the positive electrode containing the positive electrode active material in which silver oxide and manganese dioxide are blended at a specific ratio is produced, and the electrolytic solution having a specific concentration is used. Therefore, it is possible to provide an alkaline battery having favorable discharge characteristics while achieving a reduction in cost.

By adjusting the blending ratio of manganese dioxide to a more suitable range and adjusting the molar ratio between potassium hydroxide and sodium hydroxide to a more suitable ratio, it is possible to manufacture an alkaline battery with more favorable discharge characteristics. In addition, by adjusting the electrical resistance of the separator to a low range, it is possible to manufacture an alkaline battery with further improved discharge characteristics.

### BRIEF DESCRIPTION OF DRAWINGS

[FIG. 1] A perspective view showing an alkaline battery according to a first embodiment.
[FIG. 2] A graph showing a relationship between a molar ratio between potassium hydroxide and sodium hydroxide and a discharge capacity in a negative electrode of an alkaline battery manufactured in an example.
[FIG. 3] A graph showing a relationship between an electrical resistance of a separator and the discharge capacity in the alkaline battery manufactured in the example.
[FIG. 4] A graph showing a relationship between a concentration of potassium hydroxide in an electrolytic solution and the discharge capacity in the alkaline battery manufactured in the example.
[FIG. 5] A graph showing a relationship between a ratio of manganese dioxide and the discharge capacity in the alkaline battery manufactured in the example.

### DESCRIPTION OF EMBODIMENTS

Hereinafter, an embodiment in which the present invention is applied to a button-shaped alkaline battery will be described with reference to the drawings.

### <First Embodiment>

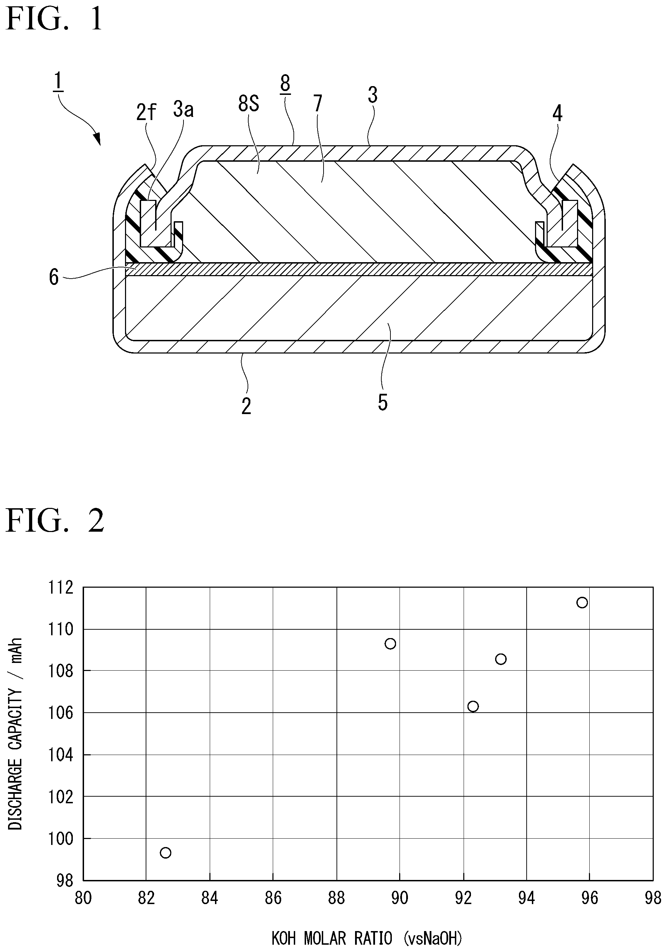

FIG. 1 is a cross-sectional view showing a button-shaped alkaline battery according to a first embodiment of the present invention. As shown in FIG. 1, a battery 1 of the present embodiment is a battery in which a positive electrode mixture, a negative electrode mixture, an electrolytic solution, and the like, which will be described later, are accommodated in a flat metal container. A metal can includes a positive electrode can 2 and an negative electrode can 3.

The positive electrode can 2 is formed of, for example, stainless steel (SUS) or a material obtained by plating stainless steel with nickel. The positive electrode can 2 is molded, for example, in a flat cylindrical shape (a shallow cup shape). The positive electrode can 2 accommodates a positive electrode mixture 5 and functions as a positive electrode current collector.

The negative electrode can 3 is formed of a clad material having a three-layer structure including, for example, a nickel outer surface layer, a metal layer made of stainless steel (SUS), and a current collector layer made of copper. The negative electrode can 3 is molded, for example, in a flat cylindrical shape (a shallow cup shape). The negative electrode can 3 has a circular opening portion 3a formed to be folded back. For example, a ring-shaped gasket 4 made of nylon is mounted on the opening portion 3a.

The negative electrode can 3 is fitted to a circular opening portion 2f of the positive electrode can 2 from an opening portion 3a side on which the gasket 4 is mounted. The opening portion 2f of the positive electrode can 2 is sealed by being crimped toward the gasket 4. As a result, a disk-shaped (button-shaped or coin-shaped) container (case) 8 is formed. A sealed space 8S is formed inside the container 8. The gasket 4 insulates and seals the positive electrode can 2 and the negative electrode can 3.

The positive electrode mixture 5, a separator 6, a negative electrode mixture 7, and an electrolytic solution (not shown) are accommodated in the sealed space 8S. The positive electrode mixture 5 is disposed on a positive electrode can 2 side with the separator 6 interposed therebetween, and the negative electrode mixture 7 is disposed on a negative electrode can 3 side.

The positive electrode mixture 5 includes a positive electrode active material, a conductive agent, an electrolytic solution, a binder, an additive, and the like.

The positive electrode active material is preferably a material that can be used as a positive electrode active material in a case where zinc or a zinc alloy is used as a negative electrode active material. For example, a mixture of silver oxide powder (Ag₂O powder) and manganese dioxide powder (MnO₂ powder) can be used as the positive electrode active material. Silver nickel oxide (AgNiO₂) may be further added to the positive electrode active material.

As the conductive auxiliary agent, for example, graphite or the like can be used. As the additive, for example, a hydrogen storage alloy (LaNi₅) can be used.

In a case where the positive electrode active material is the mixture of silver oxide powder and manganese dioxide powder, manganese dioxide is preferably contained in the positive electrode mixture in an amount of 50% by mass or less. A manganese dioxide content in the positive electrode mixture is preferably 25% to 50% by mass and more preferably 25% to 44% by mass.

By setting the manganese dioxide content to be in the above-described range, the amount of silver oxide used can be reduced, and the cost can be reduced. Furthermore, an effect of improving discharge characteristics can be obtained, and particularly, it is possible to prevent a decrease in capacity at the end of discharging in a case of discharging with a large current.

As an example, manganese dioxide having physical properties of a MnO₂ content of 91.0% or more, an amount of particles having a particle size of 75 µm or less of 80.0% or more, and an alkaline potential of 220 mV or more can be used.

In the present specification, in a case where an upper limit and a lower limit of a component content are expressed using "to", a range including the upper limit and the lower limit is indicated unless otherwise specified. Therefore, 25% to 50% by mass means 25% by mass or more and 50% by mass or less.

The negative electrode mixture 7 preferably contains, for example, a negative electrode active material, a thickener, an electrolytic solution (alkaline aqueous solution), and other additives such as zinc oxide. Zinc oxide (ZnO) functions as a conductivity stabilizer. The additives may include a viscoelasticity adjuster, a resin powder, and the like.

As the negative electrode active material, for example, zinc (Zn) powder or zinc alloy powder can be used. As the thickener, for example, polyacrylic acid, carboxymethyl cellulose, or a mixture of polyacrylic acid and carboxymethyl cellulose is preferable. By using carboxymethyl cellulose or polyacrylic acid, lyophilicity and liquid retention of the negative electrode mixture 7 with respect to the electrolytic solution can be improved.

As the electrolytic solution contained in the negative electrode mixture 7, for example, an alkaline aqueous solution, particularly, a mixed aqueous solution of a potassium hydroxide (KOH) aqueous solution and a sodium hydroxide (NaOH) aqueous solution is preferably used. In a case where the negative electrode mixture 7 is obtained as a gel, the negative electrode mixture 7 preferably contains potassium hydroxide and sodium hydroxide at a ratio of 89:11 to 96:4 in terms of molar ratio, and more preferably at a ratio of 89.70:10.30 to 95.76:4.24 in terms of molar ratio.

In combination with the electrolytic solution (KOH aqueous solution having a concentration of 30% to 50%) having the composition described later, the negative electrode mixture 7 not only exhibits excellent conductivity but also holds the electrolytic solution around the negative electrode active material (Zn) until the end of discharging. As a result, it is possible to improve a utilization efficiency of the active material, and it is possible to provide an alkaline battery having excellent discharge characteristics.

As the alkaline aqueous solution used in the negative electrode mixture 7, for example, a potassium hydroxide aqueous solution having a concentration of 45% and a sodium hydroxide aqueous solution having a concentration of 27% are used. An input ratio between the potassium hydroxide aqueous solution and the sodium hydroxide aqueous solution is set to a range of 88:12 to 95:5 in terms of mass ratio, and can be set to, for example, 91:9 in terms of mass ratio.

Due to the above relationship, the potassium hydroxide and the sodium hydroxide in the negative electrode mixture 7 are included in the negative electrode mixture 7 at a molar ratio of 89:11 to 96:4, and more specifically, at a ratio of 89.70:10.30 to 95.76:4.24.

By setting the input ratio of the potassium hydroxide aqueous solution to 88% to 95% by mass, desired electrical characteristics (discharge capacity) of the battery can be obtained.

In addition, by setting the input ratio of the potassium hydroxide aqueous solution to 95% by mass or less, handleability of the negative electrode mixture can be kept in a good state. Therefore, in a case of manufacturing an alkaline battery, handling of the negative electrode mixture is facilitated. In order to obtain the electrical characteristics of the battery and the handleability of the negative electrode mixture, the concentration and the input ratio of the alkaline aqueous solution to be input can be appropriately adjusted to achieve the molar ratio between potassium hydroxide and sodium hydroxide in the negative electrode mixture 7 described above.

The concentration of the alkaline aqueous solution in the present specification is expressed in terms of mass fraction (mass percent concentration) unless otherwise specified.

The viscoelasticity adjusting material is blended as necessary to adjust viscoelasticity of the negative electrode mixture 7 to a viscoelasticity such that good handling properties are obtained and productivity is improved. As the viscoelasticity adjusting material, a resin powder that does not react with a strongly alkaline electrolytic solution is used. For example, polytetrafluoroethylene, polypropylene, polyamide, polyethylene powder, an acrylic resin, and the like are used as the viscoelasticity adjusting material.

A state that does not react with the electrolytic solution means a state that does not chemically react with the electrolytic solution and does not absorb the electrolytic solution.

The separator 6 is interposed between the positive electrode mixture 5 and the negative electrode mixture 7. As the separator 6, for example, an insulating film having a large ion permeability and a high mechanical strength is used.

As the separator 6, a separator used for a separator of a battery can be applied, and particularly a separator having an electrical resistance of 250 mΩ·cm² or less is preferable. The separator 6 consists of cellophane, a grafted membrane, and the like. These materials may be used in combination, or a required number of films or sheets consisting of the same type of material may be stacked to be used. By forming the separator 6 of a material having an electrical resistance of 250 mΩ·cm² or less, an alkaline battery having excellent conductivity in combination with an electrolytic solution described later can be configured.

In the present embodiment, for example, a potassium hydroxide aqueous solution having a concentration of 40% to 50% can be used as the electrolytic solution with which the container 8 is filled. The concentration of the potassium hydroxide aqueous solution is preferably 44% to 50% and more preferably 45% to 50%. In a case where the concentration of the electrolytic solution is within the above-described range, sufficient conductivity can be obtained. The higher the concentration of potassium hydroxide, the better the conductivity. However, in a case where the concentration of potassium hydroxide exceeds 50%, there is a concern that the conductivity may deteriorate, and thus there is a concern that a sufficient discharge capacity may not be obtained.

### (Method for Manufacturing Alkaline Battery)

In order to manufacture the alkaline battery 1, the positive electrode mixture 5 and the negative electrode mixture 7 are first produced. Next, the electrolytic solution is injected into the positive electrode can 2, and then the positive electrode mixture 5 is placed in the positive electrode can 2. Next, the separator 6 and the gasket 4 are incorporated into the positive electrode can 2, and then the electrolytic solution is injected. Then, the negative electrode mixture 7 is disposed, and then the negative electrode can 3 is incorporated. Last, the opening portion 2f of the positive electrode can 2 is crimped to seal the case 8. In this manner, the alkaline battery 1 shown in FIG. 1 can be obtained.

More specifically, in order to manufacture the alkaline battery 1, the positive electrode can 2 is filled with the positive electrode mixture 5 molded into a pellet shape. In addition, the separator 6 is laid on the positive electrode mixture 5 and the gasket 4 is press-fitted into the positive electrode can 2. Then, the gel-like negative electrode mixture 7 is placed on the separator 6, and after filling with the electrolytic solution, the negative electrode can 3 is placed thereon. Furthermore, the opening portion 2f of the positive electrode can 2 is crimped to seal the case 8. In this manner, the alkaline battery 1 shown in FIG. 1 can be obtained.

In a case where the gel-like negative electrode mixture 7 is placed on the separator 6, a negative electrode mixture 7 having good handleability, in which potassium hydroxide and sodium hydroxide are blended as an electrolytic solution at a molar ratio of 89:11 to 96:4, is used. Therefore, a required amount of the negative electrode mixture 7 can be placed without any problem.

In the alkaline battery 1 of the present embodiment, manganese dioxide is blended in the positive electrode mixture at a suitable ratio of 50% by mass or less, so that the amount of expensive silver oxide used is reduced. Therefore, the cost can be reduced. In addition, a potassium hydroxide aqueous solution having a concentration of 40% to 50% is contained in the electrolytic solution, and the molar ratio between potassium hydroxide and sodium hydroxide as the electrolytic solution contained in the gel-like negative electrode is set to a suitable ratio of 89:11 to 96:4. Therefore, even under a heavy load condition, it is possible to prevent a decrease in capacity until the end of discharging, and it is possible to provide the alkaline battery 1 having excellent discharge characteristics.

By the way, in the present embodiment, the alkaline battery 1 including the container 8 consisting of the positive electrode can 2 and the negative electrode can 3 made of metal has been described, but the present invention is not limited to this case. The container is not limited to a metal container, and for example, the container may be configured as a positive electrode container and a negative electrode container, which are formed of a laminated film of a metal foil and a resin layer.

That is, the configuration of the container is not particularly limited, and any form of container applied to a general battery may be used.

### EXAMPLES

A prototype of a button-shaped battery having the internal structure shown in FIG. 1 was produced and subjected to a test described below. A size of the button-shaped battery was set to a diameter of 11.6 mm and a height of 5.4 mm. A positive electrode can of the button-shaped battery was made of stainless steel, and a negative electrode can was formed of a clad material having a three-layer structure consisting of nickel, stainless steel, and copper.

As will be described later, a positive electrode mixture, a separator, a negative electrode mixture, and an electrolytic solution are accommodated in a container consisting of the positive electrode can and the negative electrode can as shown in FIG. 1. Furthermore, after a gasket was mounted, the positive electrode can was crimped and sealed to produce a prototype of an alkaline battery.

### (Production of Positive Electrode)

794.0 mg of the positive electrode mixture formed by mixing 65.0% by mass of silver oxide (Ag₂O) as an active material, 31.0% by mass of manganese dioxide (MnO₂) containing an acrylic polymer as a binder, 3.0% by mass of graphite as a conductive auxiliary agent, and 1.0% by mass of a hydrogen storage alloy (LaNi₅) was press-molded to produce a pellet-shaped positive electrode.

In producing the pellet-shaped positive electrode, other positive electrode pellets in which a manganese dioxide content was changed to six different values, 0%, 25%, 39%, 42%, 49%, and 59% by mass were also produced and used for the production of a prototype alkaline battery.

### (Production of Negative Electrode)

58.4% by mass of zinc (Zn) powder as an active material, 0.5% by mass of polyacrylic acid as a thickener, 2.8% by mass of carboxymethyl cellulose, and 38.3% by mass of an electrolytic solution for a negative electrode mixture were mixed to produce a gel-like negative electrode mixture.

Five kinds of electrolytic solutions for a negative electrode mixture were produced using a potassium hydroxide aqueous solution having a concentration of 45% and a sodium hydroxide aqueous solution having a concentration of 27%, at mixing ratios described below such that a molar ratio between potassium hydroxide and sodium hydroxide in the negative electrode mixture was in a range of 83:17 to 96:4. Each prototype alkaline battery was produced by using each of the electrolytic solutions having the mixing ratios. The five kinds of mixing ratios are 83%, 90%, 92%, 93%, and 96% in terms of the molar ratio of potassium hydroxide.

### (Assembly Step)

30.2 µL of a potassium hydroxide aqueous solution having a concentration of 30% to 50% was injected into the positive electrode can having an outer diameter of 11.6 mm as the electrolytic solution. Next, the pellet-shaped positive electrode mixture was placed on an inner bottom surface of the positive electrode can, and two sheets of a laminated separator of cellophane and a grafted membrane were placed thereon. Next, after incorporating a nylon gasket into the positive electrode can, each prototype alkaline battery was produced by using, as the electrolytic solution, each of potassium hydroxide aqueous solutions having four compositions described below.

Next, after placing the negative electrode mixture on the separator by leveling, the negative electrode can was incorporated, and the positive electrode can was crimped and sealed.

By the above-described steps, a button-shaped prototype alkaline battery (so-called 44 size) having a diameter of 11.6 mm and a height of 5.4 mm was produced. In addition, a plurality of prototype alkaline batteries were prepared by using each of separators having electrical resistances of 176, 250, and 525 mΩ·cm².

The electrical resistance of such a separator can be obtained by adjusting various conditions such as thicknesses of the cellophane and the grafted membrane, and a grafting ratio of the grafted membrane (a ratio obtained by dividing a weight of graft chains in graft polymerization by a weight of a base material).

The plurality of prototype alkaline batteries described above were subjected to the following tests.

A constant current (10 mA) discharge test was conducted using each of the prototype alkaline batteries to obtain a discharge capacity value at a COV of 1.0 V. The constant current (10 mA) discharge test corresponds to a heavy load test in the button-shaped alkaline battery.

Table 1 and FIG. 2 show a relationship between a molar ratio of potassium hydroxide and discharge capacity measurement results of the plurality of prototype alkaline batteries. A plurality of alkaline batteries are produced by changing the mixing molar ratio between potassium hydroxide and sodium hydroxide in the above-described electrolytic solution for a negative electrode mixture.

In the negative electrode mixture, the molar ratio between potassium hydroxide and sodium hydroxide is set to 100 in total. Therefore, a value obtained by dividing 100 by the molar ratio of potassium hydroxide shown in Table 1 corresponds to the molar ratio of sodium hydroxide. In addition, two of each of the prototype alkaline batteries having different molar ratios are produced and subjected to the test. Therefore, the obtained discharge capacity value indicates an average value of the two prototype alkaline batteries.

**[Table 1]**

| KOH molar ratio in negative electrode mixture | Discharge capacity value/mAh |
|---|---|
| 83 | 99 |
| 90 | 109 |
| 92 | 106 |
| 93 | 109 |
| 96 | 111 |

From the relationship shown in Table 1 and FIG. 2, it was found that it is desirable to use an alkaline aqueous solution containing potassium hydroxide and sodium hydroxide at a molar ratio in a range of 89:11 to 96:4 in the electrolytic solution contained in the negative electrode mixture of the alkaline battery. Even in the above-described range, it can be seen that an alkaline battery having a particularly excellent discharge capacity value can be obtained by selecting a range of 90:10 to 96:4.

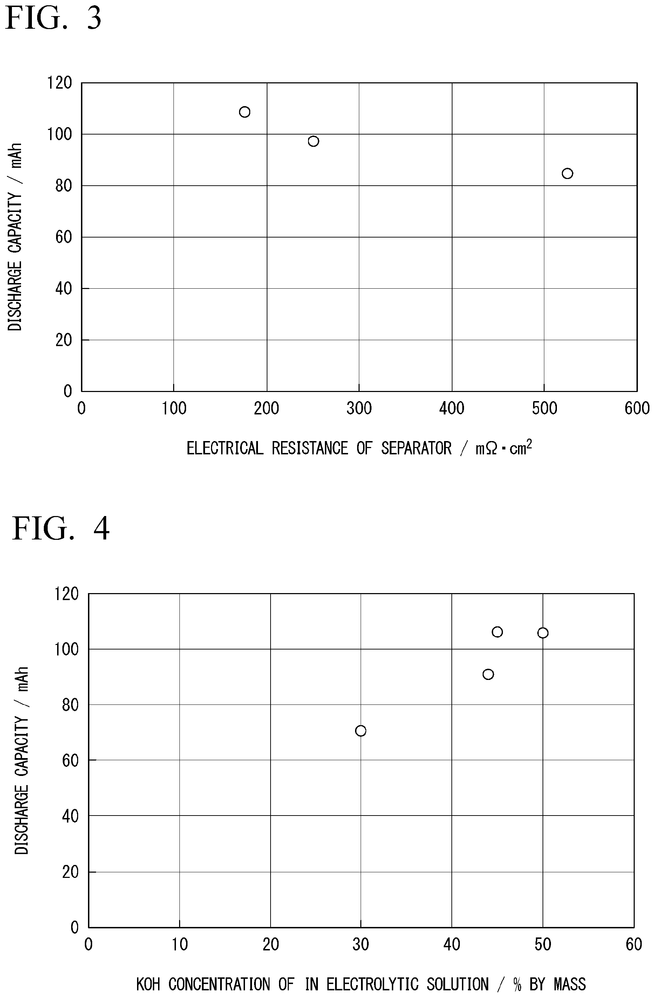

Table 2 below and FIG. 3 show the discharge capacity measurement results of the plurality of prototype alkaline batteries obtained by using various separators having different electrical resistances. In addition, regarding the molar ratio between potassium hydroxide and sodium hydroxide contained in the negative electrode mixture, the molar ratio of potassium hydroxide is fixed to 93.

In the negative electrode mixture, the molar ratio between potassium hydroxide and sodium hydroxide is set to 100 in total. Therefore, the molar ratio of sodium hydroxide is 7. In addition, two alkaline batteries using separators having different electrical resistances are prepared and subjected to the test.

Therefore, the obtained discharge capacity value is an average value of the two prototype alkaline batteries.

**[Table 2]**

| Electrical resistance of separator/mΩ·cm² | Discharge capacity value/mAh |
|---|---|
| 176 | 109 |
| 250 | 97 |
| 525 | 85 |

As shown in Table 2 and FIG. 3, the alkaline battery in which the electrical resistance of the separator exceeds 500 mΩ·cm² has a low discharge capacity value. Therefore, the electrical resistance of the separator is desirably 500 mΩ·cm² or less. Regarding the electrical resistance of the separator, it can be seen that in a case where the electrical resistance is 250 mΩ·cm² or less, a discharge capacity can be sufficiently increased.

Table 3 below and FIG. 4 show results of measuring a relationship between a concentration of potassium hydroxide and the discharge capacity in each of the prototype alkaline batteries. In addition, a plurality of prototype alkaline batteries are produced by changing the potassium hydroxide concentration in the electrolytic solution to be accommodated in the container together with the positive electrode or the negative electrode.

**[Table 3]**

| KOH concentration in electrolytic solution/% by mass | Discharge capacity value/mAh |
|---|---|
| 30 | 70 |
| 44 | 91 |
| 45 | 106 |
| 50 | 106 |

As shown in Table 3 and FIG. 4, the discharge capacity value is significantly reduced in the prototype alkaline battery in which the concentration of potassium hydroxide in the electrolytic solution is 30%. On the other hand, in the prototype alkaline batteries of 44% to 50%, excellent discharge capacity values are obtained. Therefore, in consideration of the results of Table 3 and FIG. 4, it is considered that the concentration of potassium hydroxide in the electrolytic solution is desirably adopted in a range of 40% to 50%, and it is considered that a range of 44% to 50% is desirable in order to reliably obtain an excellent discharge capacity.

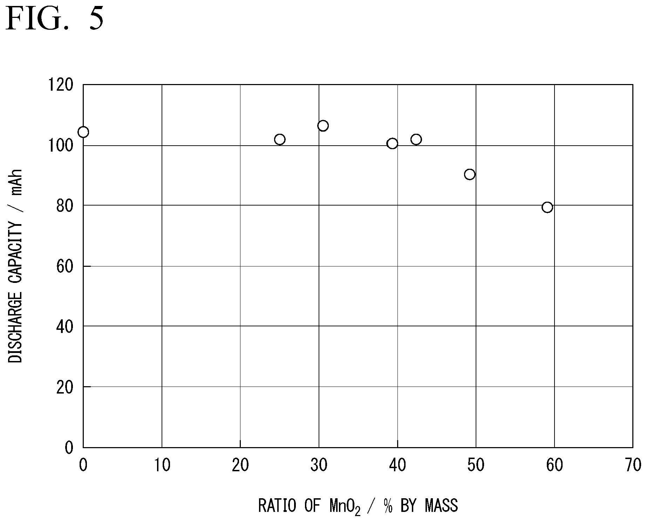

Table 4 below and FIG. 5 show results of measuring a relationship between a blending ratio of manganese dioxide and the discharge capacity in each of the prototype alkaline batteries. Regarding silver oxide and manganese dioxide constituting the positive electrode mixture, a plurality of prototype alkaline batteries are produced by changing the blending ratio of manganese dioxide in the positive electrode mixture.

**[Table 4]**

| Ratio of MnO₂ in positive electrode (% by mass) | Discharge capacity value/mAh |
|---|---|
| 0 | 104 |
| 25 | 102 |
| 31 | 106 |
| 39 | 100 |
| 42 | 102 |
| 49 | 90 |
| 59 | 79 |

An alkaline battery shown in Table 4 and FIG. 5 in which a blending amount of manganese dioxide is set to 0% by mass is an alkaline battery to which a positive electrode active material consisting of only silver oxide is applied. By replacing 50% by mass or less of silver oxide with manganese dioxide, an alkaline battery having a small discharge capacity reduction ratio could be obtained.

It was found that in a case where the blending amount of manganese dioxide is set to 44% by mass or less, more specifically, in a range of 25% to 44% by mass, it is possible to provide an alkaline battery in which a decrease in discharge capacity hardly occurs compared to a prototype alkaline battery using a positive electrode active material consisting of only silver oxide.

### INDUSTRIAL APPLICABILITY

The alkaline battery of the present disclosure has excellent discharge characteristics and can be reduced in cost, and thus has high industrial availability.

### REFERENCE SIGNS LIST

1 Battery
2 Positive electrode can
3 Negative electrode can
4 Gasket
5 Positive electrode mixture
6 Separator
7 Negative electrode mixture
8 Container (case)
8S Sealed space

## Claims

1. An alkaline battery comprising:
a container; and
a positive electrode, a negative electrode, a separator, and an electrolytic solution which are accommodated in the container,
wherein the electrolytic solution is a potassium hydroxide aqueous solution having a concentration of 40% to 50%,
the negative electrode consists of a gel-like negative electrode mixture containing a negative electrode active material and an alkaline aqueous solution,
the alkaline aqueous solution contains potassium hydroxide and sodium hydroxide in a molar ratio range of 89:11 to 96:4,
the positive electrode consists of a positive electrode mixture including a positive electrode active material containing silver oxide and manganese dioxide, and
a blending ratio of manganese dioxide in the positive electrode mixture is 50% by mass or less.

2. The alkaline battery according to Claim 1,
wherein the electrolytic solution is a potassium hydroxide aqueous solution having a concentration of 44% to 50%.

3. The alkaline battery according to Claim 1 or 2,
wherein the blending ratio of manganese dioxide in the positive electrode mixture is 25% to 44% by mass.

4. The alkaline battery according to any one of Claims 1 to 3,
wherein an electrical resistance of the separator is 250 mΩ·cm² or less.

5. The alkaline battery according to any one of Claims 1 to 4,
wherein the container includes
a positive electrode can,
a negative electrode can, and
a gasket that seals the positive electrode can and the negative electrode can.

6. A method for manufacturing an alkaline battery, the alkaline battery including a container and a positive electrode, a negative electrode, a separator, and an electrolytic solution which are accommodated in the container, the method comprising:
preparing the negative electrode consisting of a gel-like negative electrode mixture containing a mixed aqueous solution in which a potassium hydroxide aqueous solution having a concentration of 45% and a sodium hydroxide aqueous solution having a concentration of 27% are mixed at a mass ratio of 88:12 to 95:5, and a negative electrode active material,
preparing the positive electrode consisting of a positive electrode mixture including a positive electrode active material containing silver oxide and manganese dioxide, in which a blending ratio of manganese dioxide in the positive electrode mixture is set to 50% by mass or less, and
preparing the electrolytic solution consisting of a potassium hydroxide aqueous solution having a concentration of 40% to 50%; and
accommodating the positive electrode, the negative electrode, the separator, and the electrolytic solution in the container.

7. The method for manufacturing an alkaline battery according to Claim 6,
wherein a potassium hydroxide aqueous solution having a concentration of 44% to 50% is used as the electrolytic solution.

8. The method for manufacturing an alkaline battery according to Claim 6 or 7,
wherein a positive electrode in which the blending ratio of manganese dioxide is set to 25% to 44% by mass is used as the positive electrode.

9. The method for manufacturing an alkaline battery according to any one of Claims 6 to 8,
wherein a separator having an electrical resistance of 250 mΩ·cm² or less is used as the separator.
